# EUROPÄISCHE PATENTSCHRIFT

(11) **EP 0 419 773 B1**
(45) Veröffentlichungstag und Bekanntmachung des Hinweises auf die Patenterteilung: **26.03.1997**
(21) Anmeldenummer: 90112447.9
(22) Anmeldetag: 29.06.1990
(51) Int. Cl.: B41F 13/04, B29C 59/04, B44C 5/02, B44B 5/02

(54) **Vorrichtung und Verfahren zum Prägen von feinen Strukturen**
Machine and method for embossing delicate webs
Procédé et appareil de gaufrage d'une bande délicate

(30) Priorität: 29.09.1989 CH 3535/89
(43) Veröffentlichungstag der Anmeldung: 03.04.1991
(73) Patentinhaber: Landis & Gyr Technology Innovation AG, 6301 Zug (CH)
(72) Erfinder: Nyfeler, Alex, CH-6340 Baar (CH); Antes, Gregor, CH-8816 Hirzel (CH); Schmidlin, Hansjörg, CH-6003 Luzern (CH)
(74) Vertreter: Müller, Hans-Jürgen, Dipl.-Ing.

(56) Entgegenhaltungen:
- EP-A- 0 159 225
- DE-A- 238 263
- DE-A- 403 649
- DE-A- 2 523 639
- DE-A- 3 728 393
- GB-A- 1 368 949
- GB-A- 2 151 188
- US-A- 1 978 715
- US-A- 3 264 978

## Beschreibung

Die Erfindung bezieht sich auf eine Vorrichtung bzw. ein Verfahren der im Oberbegriff des Anspruchs 1 bzw. 10 genannten Art.

Solche Vorrichtungen und Verfahren zum Prägen feiner Strukturen eignen sich beispielsweise zum kostengünstigen Herstellen von Folienbahnen mit lichtbeugenden optischen Merkmalen, wie Hologrammen, Beugungsgittern und dergleichen.

Es sind Verfahren nach der CH-PS 530 018 bekannt, um die Strukturen der lichtbeugenden optischen Merkmale mittels einer geheizten, endlosen bandformigen Prägematrlze in die Folienbahn einzuprägen.

Eine aus der US-PS 4 773 718 bekannte Prägevorrichtung weist einen rotierenden Prägezylinder, der auf seinem Umfang eine Prägematrize trägt, und einen auf dem Prägezylinder ablaufenden Gegendruckzylinder auf. Die Folienbahn wird zwischen den beiden Zylindern hindurchgeführt und mittels des glatten Gegendruckzylinders gegen eine Prägematrize gepresst. Bei jeder Umdrehung des Prägezylinders werden die erhabenen Strukturen der Prägematrize in die Folienbahn eingeprägt, wobei die Vorschubgeschwindigkeit der Folienbahn gleich der Umfangsgeschwindigkeit der Prägematrize ist. Motive folgen sich auf der Prägematrize in einem vorbestimmten Motivabstand, der ein ganzzahliger Teiler des Umfangs des Prägezylinders ist. Für einen anderen Motivabstand ist ein Prägezylinder mit dem entsprechenden Umfang nötig.

Aus einer Druckschrift der Firma Global Images Inc., 509 Madison Avenue, New York, NY 10022, USA, mit der Referenznummer DP 506 ist eine "POLYESTER EMBOSSING MACHINE" gemäß dem Oberbegriff des Anspruchs 1 bekannt, deren Prägezylinder zwischen zwei Gegendruckzylindern angeordnet ist und bei der die Folienbahn über eine Bahnschlaufe zweimal zum Prägen an den Prägezylinder geführt ist. Die Länge der Bahnschlaufe ist durch den Umfang des Prägezylinders vorgegeben. Die beprägte Folienbahn weist aufeinanderfolgende Abschnitte auf, die abwechselnd unter einem der beiden Gegendruckzylinder geprägt wurden. Die Mantelfläche einer halbzylinderförmigen Hälfte des Prägezylinders dient als Stütze für die Prägematrize. Die andere Hälfte des Prägezylinders ist als Aussparung ausgebildet, in der eine mechanische Einrichtung zum Festklemmen der Prägematrize angeordnet ist. Diese Anordnung ermöglicht ein schnelles Auswechseln der Prägematrize, was mit einer schlechten Nutzung des Prägezylinders erkauft wird.

Aus der EP 244 348 ist eine Stanzvorrichtung mit einem Tänzersystem bekannt, das zum Auffangen der kontinuierlich zu- und weggeführten Folienbahn dient und das periodisch ein kurzzeitiges Anhalten der Folienbahn unter der Stanze ermöglicht.

Die DE-OS 34 45 012 beschreibt eine Mehrfarbendruckmaschine. Für jede Farbe weist die Maschine einen Druckzylinder mit einer oder zwei Druckplatten auf, der auf einer Papierbahn Motive in beliebigen Motivabständen erzeugt. Die Länge jeder Druckplatte ist ein ganzzahliges Vielfaches des Motivabstandes. Der Druckzylinder weist zwei exakt um 180° versetzte Plätze zum Aufspannen der identischen starren Druckplatten auf. Der Umfang des Druckzylinders ist wesentlich grösser als die doppelte Länge einer Druckplatte. Die Papierbahn wird über die vorbestimmt eingestellte Bahnschlaufe mit Hilfe zweier um 180° versetzter Gegendruckzylinder zum Bedrucken zweimal an den gleichen Druckzylinder geführt. Zwischen dem Ende der einen Druckplatte und dem Anfang der andern ist der Kontakt beider Druckplatten mit der sich mit gleichbleibender Geschwindigkeit bewegenden Papierbahn kurzzeitig aufgehoben. Während dieser Zeit wird durch Senken der Winkelgeschwindigkeit des Druckzylinders ein vorbestimmter Vorschub der Papierbahn erreicht, wobei ein Ausrichten der Druckplatte unter dem zweiten Gegendruckzylinder auf die noch unbedruckten Lücken zwischen den bereits unter dem ersten Gegendruckzylinder auf die Papierbahn gedruckten Motiven erfolgt.

In der DE-OS 25 23 639 ist eine Druckbahn vor und nach der Druckstation über Umlenkrollen auf die beiden Rollen eines verschiebbaren Schleifenlegschlittens geführt, um zwei Schleifen auszuspannen, die die ungleichmäßige Druckbahngeschwindigkeit in der Druckstation auffangen. Die Drehgeschwindigkeit der Umlenkrollen ist mittels der Druckbahn bei jeder Richtungsänderung des Schleifenlegschlittens abzubremsen und wieder zu beschleunigen, so daß in der Druckbahn große Zugkräfte entstehen.

Die in der DE-PS 238 263 beschriebene Vorrichtung weist in der Prägeebene Ausgleichsrollen auf, die auf parallelen Hebeln drehbar und verschiebbar gelagert sind, wobei die Hebel unter Federkraft in eine Ruhelage gezwungen werden. Während des Druckvorgangs werden die Ausgleichsrollen von der Druckbahn aus ihrer Ruhelage gezogen, da die Zuführgeschwindigkeit der Druckbahn kleiner ist als die Umfangsgeschwindigkeit des Druckzylinders. In der Freiphase ist die Druckbahn freigegeben, so daß die Ausgleichrollen wieder in ihre Ruhestellung zurückkehren. Die Druckbahn muß unter einer starken Zugspannung stehen, damit das Zurückkehren der Ausgleichsrollen genügend gedämpft erfolgt.

Die in der DE-OS 25 23 639 und der DE-PS 238 263 beschriebenen Vorrichtungen eignet sich deshalb nicht zum Prägen feiner Strukturen.

Der Erfindung liegt die Aufgabe zugrunde, eine Vorrichtung zum kostengünstigen Prägen von feinen Strukturen in eine Folienbahn zu schaffen, die den Umfang eines Prägezylinders besser ausnützt und bei der ein vorbestimmter Motivabstand geprägter Motive vom Umfang des Prägezylinders unabhängig ist, sowie ein Verfahren dazu anzugeben.

Die Erfindung ist im Anspruch 1 gekennzeichnet und in Unteransprüchen sind weitere Ausbildungen beansprucht.

Nachfolgend werden Ausführungsbeispiele der Erfindung anhand der Zeichnungen näher erläutert.

Es zeigt:
- Figur 1: eine beprägte Folienbahn mit in einem vorbestimmten Motivabstand eingeprägten Motiven,
- Figur 2: eine Prägevorrichtung mit periodisch hin- und herschwingenden Ausgleichsrollen,
- Figur 3: einen Querschnitt durch einen Prägezylinder,
- Figur 4: eine Steuereinrichtung,
- Figur 5: die Prägevorrichtung mit einer Antriebsrolle, deren Drehgeschwindigkeit sich periodisch ändert,
- Figur 6: die Prägevorrichtung mit zwei Gegendruckzylindern und einer Umlenkrolle,
- Figur 7: Diagramme von Prägedrücken und einem Abstandswert der Umlenkrolle,
- Figur 8: die Prägevorrichtung mit zwei Prägezylindern mit periodisch sich ändernden Winkelgeschwindigkeiten,
- Figur 9: die Prägevorrichtung mit zwei Umlenkrollen und
- Figur 10: der Prägezylinder mit seitlichen Laufringen.

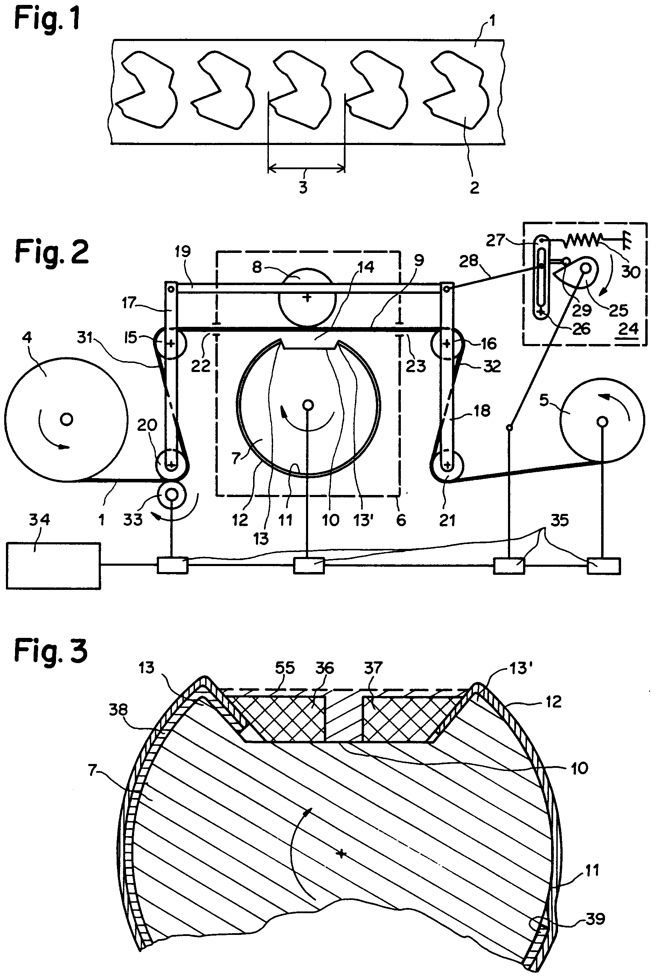

In der Figur 1 bedeutet 1 eine Folienbahn, die mit feinen reliefartigen Strukturen beprägt worden ist. Die Strukturen bilden Motive 2, welche sich in einem vorbestimmten Motivabstand 3 auf der Folienbahn 1 folgen. Das Material der Folienbahn 1 ist vorzugsweise ein Thermoplast, wie z. B. Polyvinylchlorid oder Polyester, oder ein mit einem Thermoplast überzogener Schicht- oder Faserverbund. Auch dünne Metallfolien, wie in der US-PS 4 773 718 erwähnt, sind verwendbar. Die Strukturen bilden vorteilhaft beugungsoptisch wirksame Elemente, z. B. Beugungsgitter oder Hologramme.

Die Figur 2 zeigt die wesentlichen Teile der Vorrichtung. Die unbeprägte Folienbahn 1 ist auf eine Vorratsrolle 4 gewickelt. Eine Aufwickelrolle 5 nimmt die beprägte Folienbahn 1 auf. Zwischen den beiden Rollen 4 und 5 ist eine Prägestation 6 angeordnet. Die Prägestation 6 umfasst wenigstens einen Prägezylinder 7 und wenigstens einen auf dem Prägezylinder 7 abrollenden Gegendruckzylinder 8. Die Achsen der beiden Zylinder 7 und 8 sind radial gegeneinander verschiebbar und in einem vorbestimmten Abstand genau einstellbar, wobei die Folienbahn 1 zwischen den beiden Zylindern 7 und 8 einem vorbestimmten Prägedruck ausgesetzt ist. Das Zu- und Wegführen der Folienbahn 1 erfolgt in einer dem Prägezylinder 7 und dem Gegendruckzylinder 8 gemeinsamen Tangentialebene, in einer Prägeebene 9. Beispielsweise ist in der Prägestation 6 der Prägezylinder 7 unterhalb und der Gegendruckzylinder 8 oberhalb der Folienbahn 1 angeordnet.

Im Prägezylinder 7 ist parallel zu Mantellinien des Prägezylinders 7 eine Ausnehmung 10 ausgefräst, deren Seitenwände z. B. eine radiale Richtung aufweisen. Eine verbleibende, glatt geschliffene zylindrische Teilfläche des Prägezylinders 7, ein Mantelausschnitt 11, dient als Unterlage für eine Prägematrize 12. Vorzugsweise sind der Prägezylinder 7 und die Prägematrize 12 während des Prägens auf eine vom Material der Folienbahn 1 abhängige vorbestimmte Temperatur erwärmt.

Die Prägematrize 12 weist auf der dem Gegendruckzylinder 8 zugewandten Fläche ein Negativ der feinen reliefartigen Strukturen auf, die in die Folienbahn 1 eingeprägt werden und die Motive 2 (Figur 1) bilden. Die nutzbare Länge der Prägematrize 12 ist durch den Mantelausschnitt 11 vorbestimmt und beträgt mehr als 50% des Umfangs des Prägezylinders 7. Die Ausnehmung 10 ermöglicht ein schnelles Befestigen der Prägematrize 12. Die beiden Enden der Prägematrize 12 sind um eine Startkante 13 bzw. um eine Endkante 13′ radial nach innen an eine Seitenwand der Ausnehmung 10 geschlagen und festgeklemmt. Die Drehrichtung des Prägezylinders 7 bestimmt die Bezeichnung Startkante 13 bzw. Endkante 13′.

Die Prägematrize 12 weist für diese Befestigungsart vorteilhaft die Form eines dünnen flexiblen Blechs auf, z. B. aus Nickel mit einer Dicke von 0,1 mm. Sie erstreckt sich über die ganze geschliffene Fläche des Mantelausschnitts 11, liegt glatt auf dem Mantelausschnitt 11 auf und ist straff gespannt. Beispielsweise beträgt die nutzbare Breite der Folienbahn 1 und der Prägematrize 12 jeweils 36 cm, so dass zehn Motive von je 3 cm Durchmesser auf der Prägematrize nebeneinander Platz finden, die gleichzeitig in die Folienbahn 1 eingeprägt werden.

Solange beim Drehen des Prägezylinders 7 der Mantelausschnitt 11 mit der Prägematrize 12 unter dem Gegendruckzylinder 8 abrollt, ist die Folienbahn 1 zwischen der Prägematrize 12 und dem Gegendruckzylinder 8 eingeklemmt und dem Prägedruck ausgesetzt, wobei die feinen Strukturen von der Prägematrize 12 auf die Folienbahn 1 übertragen werden. Bei jeder Umdrehung des Prägezylinders 7 bildet sich zwischen den beiden Zylindern 7 und 8 eine Oeffnung 14, wenn der Bereich der Ausnehmung 10 dem Gegendruckzylinder 8 gegenüber steht. Der Prägedruck verschwindet und die Folienbahn 1 ist frei verschiebbar. Jede Umdrehung des Prägezylinders 7 besteht somit aus einer Präge- und einer Freiphase.

Mit Vorteil sind vor der Prägestation 6 eine erste Ausgleichsrolle 15 und nach der Prägestation 6 eine zweite Ausgleichsrolle 16 angeordnet. Die beiden Ausgleichsrollen 15 und 16, sog. Tänzer, spannen die Folienbahn 1 in der Prägeebene 9 auf. Vorteilhaft sind die Achsen der Ausgleichsrollen 15 und 16 auf einem Parallelogrammgestänge montiert und sind miteinander parallel zum Prägezylinder 7 verschiebbar, wodurch die Vorschubgeschwindigkeit der Folienbahn 1 in der Prägestation 6 kurzzeitig veränderbar ist.

Das Parallelogrammgestänge umfasst vorteilhaft zwei Hebelpaare 17 und 18 sowie ein Verbindungsstück 19. Das erste Hebelpaar 17 ist auf der der Vorratsrolle 4 zugewandten Seite der Prägestation 6 angeordnet und trägt die erste Ausgleichsrolle 15. Auf der anderen Seite der Prägestation 6 ist auf dem zweiten Hebelpaar 18 die zweite Ausgleichsrolle 16 befestigt. Das eine Ende des Hebelpaares 17 bzw. 18 ist um die feststehende Achse einer Leitrolle 20 bzw. 21 drehbar gelagert. Das Verbindungsstück 19 ist gelenkig mit den anderen Enden der beiden Hebelpaare 17 und 18 verbunden. Der Abstand zwischen den Leitrollen 20 und 21 ist gleich lang wie die Länge des Verbindungsstücks 19. Die beiden Hebelpaare 17 und 18 einerseits, das Verbindungsstück 19 und der Abstand zwischen den Leitrollen 20 und 21 andereseits bilden die parallelen Seiten des Parallelogramms.

Alle Achsen der Rollen 4, 5, 15, 16, 20 und 21 und die Achsen der Zylinder 7 und 8 sind zueinander parallel. Beispielsweise sind die Achsen in der Zeichnung der Figur 2 senkrecht zur Zeichenebene dargestellt. In dieser drehen sich auch die Hebelpaare 17 und 18 beim Verschieben des Verbindungsstücks 19.

Der Achsabstand der Rollen 15 und 20 auf dem Hebelpaar 17 sowie derjenige der Rollen 16 und 21 auf dem Hebelpaar 18 sind gleich gross. Diese Achsabstände und die Länge des Verbindungsstücks 19 bestimmen einen maximalen Weg, um den die Achsen der Ausgleichsrollen 15 und 16 parallel verschiebbar sind, beispielsweise um den halben Umfang des Prägezylinders 7.

Die Prägestation 6 ist derart zwischen den beiden Hebelpaaren 17 und 18 angeordnet, dass ein freies Verschieben des Verbindungsstücks 19 in seiner Längsrichtung möglich ist; beispielsweise bewegt sich die Ausgleichsrolle 15 auf einen Einlauf 22 der Prägestation 6 zu, während sich gleichzeitig die Ausgleichsrolle 16 von einem Ausgang 23 der Prägestation 6 entfernt.

Die Vorrichtung weist eine Steuereinrichtung 24 auf, welche eine periodische Relativbewegung zwischen der Folienbahn 1 und der Prägematrize 12 mit einer vorbestimmten Amplitude erzeugt. Die Relativbewegung ist durch ein Mittel der Steuereinrichtung 24 mit der Umdrehung des Prägezylinders 7 synchronisiert.

Beispielsweise umfasst die Steuereinrichtung 24 eine direkt vom Prägezylinder 7 angetriebene Steuerscheibe 25 und eine die Berandung der Steuerscheibe 25 abtastende Kulisse 27, die sich um einen festen Drehpunkt 26 ausserhalb der Steuerscheibe 25 in der Zeichenebene der Figur 2 bewegt. Die Form der Steuerscheibe 25 ist durch den Prägezylinder 7 vorbestimmt. Die Kulisse 27 weist eine Nut in radialer Richtung bezogen auf den Drehpunkt 26 auf, in die ein Bolzen, der an dem einen Ende eines Schiebers 28 angeordnet ist, verschiebbar eingreift. Der Schieber 28 überträgt die Bewegungen der Kulisse 27 auf das Verbindungstück 19. Das Parallelogrammgestänge setzt diese Bewegungen in periodische Auslenkungen der Ausgleichsrollen 15, 16 um. Durch Verschieben des Bolzens in der Nut der Kulisse 27 verändert sich der Abstand des Bolzens vom Drehpunkt 26 und als Folge die Amplitude der Bewegungen des Schiebers 28. Die Amplitude der periodischen Auslenkungen der Ausgleichsrollen 15, 16 ist somit vorbestimmt einstellbar.

Ein Abtastpunkt 29 der Kulisse 27 gleitet auf der Berandung der Steuerscheibe 25. Eine Kraft, die z. B. eine Zugfeder 30 erzeugt, greift an der Kulisse 27 an und dreht die Kulisse 27 um den Drehpunkt 26 gegen die Steuerscheibe 25, damit der Abtastpunkt 29 genau der Berandung der Steuerscheibe 25 folgt.

Beispielsweise verkleinert sich während der Prägephase infolge der Drehung des Prägezylinders 7 und damit auch der Steuerscheibe 25 die radiale Entfernung eines Abtastpunktes 29 vom Mittelpunkt der Steuerscheibe 25 stetig. In der Freiphase entfernt sich der Abtastpunkt 29 vom Mittelpunkt der Steuerscheibe 25 wieder, bis der Abtastpunkt 29 einen maximalen Abstand vom Mittelpunkt zu Beginn der Prägephase erreicht hat. Sobald sich die Startkante 13 unter dem Gegendruckzylinder 8 befindet, nimmt die radiale Entfernung des Abtastpunktes 29 wieder ab.

Die unbeprägte Folienbahn 1 ist, von der Vorratsrolle 4 kommend, unter die erste Leitrolle 20 und um diese herum in einer ersten, von der ersten Ausgleichsrolle 15 aufgespannten Schlaufe 31 in die Prägestation 6 geführt. In der Prägeebene 9 läuft die Folienbahn 1 zum Beprägen zwischen dem Prägezylinder 7 und dem Gegendruckzylinder 8 hindurch. Die zweite Ausgleichsrolle 16 spannt die beprägte Folienbahn 1 in einer zweiten Schlaufe 32 zwischen den Zylindern 7, 8 und der zweiten Leitrolle 21 auf. Um die zweite Leitrolle 21 herum gelangt die beprägte Folienbahn 1 auf die Aufwickelrolle 5.

Parallel zur Leitrolle 20 ist eine Antriebsrolle 33 derart angeordnet, dass sie mittels einer vorbestimmten Kraft gegen die Leitrolle 20 gepresst wird und die unbeprägte Folienbahn 1 zum Uebertragen von Antriebskräften einklemmt.

Eine kostengünstige Ausführung weist einen einzigen Motor 34 auf, der mittels einfacher Getriebe 35 den Prägezylinder 7, die Steuerscheibe 25, die Antriebsrolle 33 und über eine Rutschkupplung die Aufwickelrolle 5, mit je einer vorbestimmten gleichmässigen Drehgeschwindigkeit antreibt. Zusätzlich kann der Gegendruckzylinder 8 angetrieben werden.

Sobald die Antriebsrolle 33 beispielsweise im Uhrzeigersinn in Umdrehung gesetzt wird, wird die unbeprägte Folienbahn 1 mit einer gleichmässigen Abzuggeschwindigkeit von der Vorratsrolle 4 abgezogen. Die unbeprägte Folienbahn 1 läuft über die Rollen 20 und 15 in die Prägestation 6, wird dort zum Prägen zwischen den Zylindern 7 und 8 durchgezogen und gelangt schliesslich beprägt über die Rollen 16 und 21 zur Aufwickelrolle 5. Der Prägezylinder 7, die Ausgleichsrollen 15 und 16 sowie die Antriebsrolle 33 drehen sich im Uhrzeigersinn, während sich die Vorratsrolle 4, die Aufwickelrolle 5, der Gegendruckzylinder 8 und die Leitrollen 20, 21 im Gegenuhrzeigersinn drehen.

In der Steuereinrichtung 24 dreht sich die Steuerscheibe 25 synchron zum Prägezylinder 7. Die Kulisse 27 führt periodisch mit jeder Umdrehung der Steuerscheibe 25 bzw. des Prägezylinders 7 eine Wippbewegung um den Drehpunkt 26 aus, die vom Schieber 28 als Verschiebebewegung mit der vorbestimmten Amplitude auf die Ausgleichsrollen 15 und 16 übertragen wird. Die Steuereinrichtung 24 erteilt der Folienbahn 1 mittels den Ausgleichsrollen 15 und 16 in der Prägestation 6 eine zusätzliche vorbestimmte Verschiebegeschwindigkeit.

Während der Prägephase rollt der Mantelausschnitt 11 unter dem Gegendruckzylinder 8 ab. Sie dauert vom Zeitpunkt, in dem sich die Startkante 13 unter dem Gegendruckzylinder 8 befindet, bis zum Zeitpunkt, in dem die Endkante 13′ den Gegendruckzylinder 8 erreicht. In der Prägephase ist die Vorschubgeschwindigkeit der Folienbahn 1 in der Prägestation 6 gleich der durch den Prägezylinder 7 vorbestimmten Prägegeschwindigkeit, welche der Umfangsgeschwindigkeit der Prägematrize 12 entspricht. Die Vorschubgeschwindigkeit ist um die Verschiebegeschwindigkeit grösser als die mittels der Antriebsrolle 33 erzeugte Abzuggeschwindigkeit.

Die Länge der ersten Schlaufe 31 zwischen der Leitrolle 20 und dem Eingang 22 verkleinert sich deshalb während der Prägephase, um einen Mehrvorschub der Folienbahn 1 in der Prägestation 6 auszugleichen, der aus der Differenz der Prägegeschwindigkeit und der Abzuggeschwindigkeit resultiert. Gleichzeitig wird durch den Mehrvorschub am Ausgang 23 die Länge der zweiten Schlaufe 32 zwischen dem Ausgang 23 und der Leitrolle 21 vergrössert, da die beprägte Folienbahn 1 nur mit einer Wickelgeschwindigkeit auf die Aufwickelrolle 5 gewunden wird, die gleich der Abzuggeschwindigkeit der unbeprägten Folienbahn 1 ist.

Die unmittelbar an die Prägephase anschliessende Freiphase dauert bis zur Vollendung jeder Umdrehung des Prägezylinders 7. Die Steuerscheibe 25 stösst die Kulisse 27 und mittels des Schiebers 28 über das Parallelogrammgestänge die Ausgleichsrollen 15, 16 in die der Bewegung der Folienbahn 1 entgegengesetzte Richtung. Da sich jetzt die Abzuggeschwindigkeit der Folienbahn 1 und die Verschiebegeschwindigkeit subtrahieren, verkleinert sich die Vorschubgeschwindigkeit der Folienbahn 1 kurzzeitig in der Prägestation 6, wobei entsprechend der Einstellung in der Steuereinrichtung 24 die Folienbahn 1 sich verlangsamt, anhält oder sich um einen vorbestimmten Betrag zum Eingang 22 hin zurückzieht. Als Ausgleich vergrössert sich die Länge der ersten Schlaufe 31 und verkleinert sich die Länge der zweiten Schlaufe 32. Somit entsteht in der Prägestation 6 periodisch eine Relativbewegung zwischen der Folienbahn 1 und der Prägematrize 12. Die Relativbewegung wiederholt sich in der Freiphase jeder Umdrehung des Prägezylinders 7. Die Amplitude der Relativbewegung ist an der Steuereinrichtung 24 einstellbar und ist durch den Motivabstand 3 (Figur 1) vorbestimmt.

Trotz der periodischen Veränderungen der Grösse der Schlaufen 31 und 32 steht die Folienbahn 1 immer unter einer vorbestimmten Zugspannung.

Weist die nutzbare Länge der Prägematrize 12 auf dem Mantelausschnitt 11 beispielsweise Platz für 14,7 Motivabstände 3 auf, so werden in der Prägephase einer ersten Umdrehung des Prägezylinders 7 die Motive 2 (Figur 1) auf einer Strecke eingeprägt, deren Länge das 14,7-fache eines Motivabstands 3 ist. Anschliessend schiebt die Steuereinrichtung 24 in der Freiphase die Folienbahn 1 um 0,7 Teile des Motivabstands 3 zurück, damit bei der nächsten Umdrehung des Prägezylinders 7 zunächst das erste Motiv 2 auf der Prägematrize 12 in den ersten 0,7 Teilen des fünfzehnten Motivabstands 3 auf der Folienbahn 1 ein zweites Mal geprägt wird. Anschliessend werden der Rest des Motivs 2 im fünfzehnten Motivabstand 3 und die folgenden 13,7 Motive 2 der Prägematrize 12 in die unbeprägte Folienbahn 1 übertragen.

Beispielsweise besitzt die Prägematrize 12 eine nutzbare Länge des 14,7-fachen eines Motivabstands 3 und weist nur eine Gruppe von 14 vollständigen Negativen der Motive 2 auf. Der Rest der nutzbaren Länge von 0,7 Teilen des Motivabstands 3 ist völlig glatt. Bei jeder Umdrehung des Prägezylinders 7 wird diese Gruppe der 14 Motive 2 hintereinander in die Folienbahn 1 eingeprägt, gefolgt von 0,7 Teilen des Motivabstands 3 mit einer Glattprägung. In der Freiphase wird die Folienbahn 1 um die 0,7 Teile des Motivabstands 3 zurückgeschoben, damit im gleichen vorbestimmten Motivabstand 3 die nächste Gruppe der 14 Motive 2 an die bereits eingeprägte Gruppe anschliesst.

Der relative Anteil der Ausnehmung 10 bestimmt die Dauer der Freiphase bei einer vorbestimmten Drehgeschwindigkeit des Prägezylinders 7. Die Folienbahn 1 muss in der Freiphase während einer genügenden Zeitspanne frei zwischen dem Prägezylinder 7 und dem Gegendruckzylinder 8 verschiebbar sein, damit die notwendige Relativbewegung zwischen der Folienbahn 1 und der Prägematrize 12 ermöglicht wird. Beispielsweise beträgt der Anteil des Mantelausschnittes 11 etwa 75% des Umfangs des Prägezylinders 7, der einen üblichen Umfang von 12 Zoll (=304,8 mm) besitzt und der mit 65 Umdrehungen pro Minute rotiert. Die Amplitude der Relativbewegung ist so fein einstellbar, dass der Fehler des Motivabstandes 3 beim Uebergang von einer Gruppe von Motiven 2 zur nächsten praktisch verschwindet.

Für die beschriebene Prägevorrichtung ergibt sich der Vorteil, dass auf dem gleichen Prägezylinder 7 nacheinander verschiedene Prägematrizen 12 aufgespannt werden können. Ein Austauschen des Prägezylinders 7 und das Anpassen des zugehörigen Getriebes 35 entfällt. Die Motive 2 und der gewünschte Motivabstand 3 auf jeder Prägematrize 12 sind unabhängig vom Umfang des Prägezylinders 7 wählbar. Somit sind alle Motive 2, die eine kleinere Fläche als der Mantelausschnitt 11 aufweisen, unabhängig von ihrer Grösse im gewünschten Motivabstand 3 mittels eines einzigen Prägezylinders 7 in die Folienbahn 1 einprägbar. Die vorbestimmte Dauer der Freiphase, in der die Folienbahn 1 die vorbestimmte periodische Relativbewegung ausführt, legt den Anteil des Umfangs des Prägezylinders 7 fest, der zum Prägen nutzbar ist. Dieser Anteil kann über 80 % betragen.

Die Figur 3 zeigt eine in der Ausnehmung 10 angeordnete Vorrichtung zur Befestigung der flexiblen Prägematrize 12 auf dem Prägezylinder 7. Eine erste Klemmbacke 36 presst das vordere, um die Startkante 13 gebogene Ende der Prägematrize 12 auf die entsprechende Seitenwand der Ausnehmung 10. Das hintere Ende der Prägematrize 12 ist um die Endkante 13′ gezogen und mittels der zweiten Klemmbacke 37 festgehalten.

Bei beengten Platzverhältnissen ist eine Befestigung der Prägematrize 12 auf dem Mantelausschnitt 11 mittels eines einzigen Keils 55 anstelle der beiden Klemmbacken 36 und 37 vorteilhaft. Der Keil 55 klemmt beide Enden der Prägematrize 12 an den Seitenwänden der keilförmigen Ausnehmung 10 fest und ist z. B. mittels hier nicht gezeigter Schrauben am Boden der Ausnehmung 10 befestigt.

Vorteilhaft ist die Prägematrize 12 auf ihrer ganzen Breite mit einer Metallfolie 38 unterlegt. Das vordere Ende der Metallfolie 38 ist wie die Prägematrize 12 um die Startkante 13 umgebogen und mit ihr zusammen mittels der ersten Klemmbacke 36 gehalten. Die Metallfolie 38 erhöht den radialen Abstand der Prägematrize 12 von der Achse des Prägezylinders 7 und weist auf dem Mantelausschnitt 11, von der Startkante 13 her gemessen, eine Rapportlänge auf, die ein ganzzahliges Vielfaches des Motivabstandes 3 (Figur 1) ist. Ein Rand 39 am hinteren Ende der Metallfolie 38 ist parallel zu einer Mantellinie der Mantelfläche 11 geschnitten. Die Metallfolie 38 besteht beispielsweise aus Federstahl von 0,3 mm Dicke.

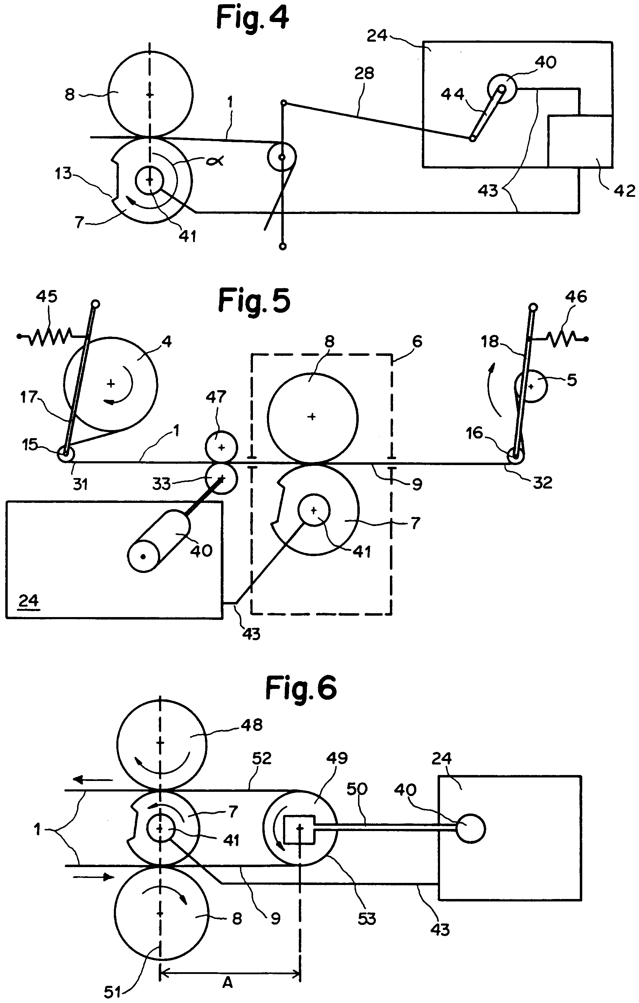

Mittels des Gegendruckzylinders 8 (Figur 2) wird der Prägedruck an einer mit der Metallfolie 38 unterlegten Mantellinie der Prägematrize 12 auf einen vorbestimmten Wert eingestellt, der zum Beprägen der Folienbahn 1 ausreicht. Nach dem Ueberfahren des Randes 39 fällt der Prägedruck vor dem Ende der Prägephase auf den Wert Null ab, um ein Ueberprägen oder das Glattprägen der Folienbahn 1 zu vermeiden. Der Prägedruck ist somit nur während der Rapportlänge auf dem vorbestimmten Wert. Die Relativbewegung zwischen der Folienbahn 1 und der Prägematrize 12 setzt erst mit dem Beginn der Freiphase ein. In der Figur 4 umfasst die Steuereinrichtung 24 vorteilhaft einen Schrittantrieb 40, beispielsweise einen Schrittmotor oder einen Linearmotor, einen Drehgeber 41 und eine elektronische Schaltung 42, die mit dem Schrittantrieb 40 und mit dem Drehgeber 41 über Leitungen 43 verbunden ist. Der Drehgeber 41 ist zusammen mit dem Prägezylinder 7 auf der gleichen Achse montiert und übermittelt der Schaltung 42 ein einem Drehwinkel α des Prägezylinders 7 entsprechendes Signal. Der Drehwinkel α ist beispielsweise in der mit einem Pfeil bezeichneten Drehrichtung des Prägezylinders 7 zwischen der Verbindungslinie der Achsen der Zylinder 7, 8 und dem Radius zur Startkante 13 gemessen.

Die elektronische Schaltung 42 setzt diese Signale in eine Impulsfolge für den Schrittantrieb 40 um, der z. B. direkt die Steuerscheibe 25 (Figur 2) antreibt. Die elektronische Schaltung 42 ist vorzugsweise programmierbar, so dass sie eine kostengünstige und reproduzierbare Anpassung der Steuereinrichtung 24 an den Motivabstand 3 (Figur 1) und an die Form des verwendeten Prägezylinders 7 ermöglicht.

Vorteilhaft treibt der Schrittmotor des Schrittantriebs 40 über eine einfache Kurbel 44 direkt den Schieber 28 an, so dass die Steuerscheibe 25 (Figur 2) entfällt. Die elektronische Schaltung 42 berechnet in Abhängigkeit des Drehwinkels α die momentane Winkelgeschwindigkeit des Schrittmotors, die für die komplizierte Bewegung des Schiebers 28 zur Steuerung der Vorschubgeschwindigkeit der Folienbahn 1 notwendig ist. Die Kurbel 44 vollführt eine oszillierende Bewegung um eine Mittellage, deren Amplitude durch den Motivabstand 3 vorbestimmt ist.

In der Anordnung gemäss der Figur 5 ist das Hebelpaar 17 bzw. 18 mit seiner Achse oberhalb der Vorratsrolle 4 bzw. der Aufwickelrolle 5 drehbar befestigt. Die Ausgleichrollen 15 und 16 sind auf einem durch das Hebelpaar 17 bzw. 18 vorbestimmten Kreisbogen unabhängig voneinander in der Zeichenebene der Figur 5 verschiebbar. Vorteilhaft treibt eine z. B. mittels Spannfedern 45, 46 erzeugte Kraft, die an den Hebelpaaren 17, 18 angreift, die Ausgleichsrollen 15, 16 auseinander und spannt die Folienbahn 1 in der Prägestation 6 auf. Die in der Prägevorrichtung gemäss der Figur 2 notwendigen Teile, das Verbindungsstück 19 sowie die Leitrollen 19 und 20, entfallen.

Die Steuereinrichtung 24 ist über die Leitung 43 mit dem am Prägezylinder 7 angeordneten Drehgeber 41 verbunden. Die Antriebsrolle 33 sitzt auf der Achse des Schrittantriebs 40, der einen Schrittmotor enthält, und wird direkt angetrieben.

Die Antriebsrolle 33 und eine zu ihr parallele Hilfsrolle 47 sind mit Vorteil zwischen der ersten Ausgleichsrolle 15 und dem Prägezylinder 7 angeordnet, wobei die Hilfsrolle 47 die Folienbahn 1 auf die Antriebsrolle 33 presst und einen Schlupf zwischen der Antriebsrolle 33 und der Folienbahn 1 verhindert.

Die Antriebsrolle 33 erzeugt die Vorschubgeschwindigkeit der Folienbahn 1 direkt und weist eine vorbestimmte, sich periodisch ändernde Winkelgeschwindigkeit auf. Die Steuereinrichtung 24 berechnet für den Schrittmotor unter der zusätzlichen Berücksichtigung des Umfangs der Antriebsrolle 33 die notwendige Impulsfolge.

Die Folienbahn 1 wird beispielsweise im Uhrzeigersinn von der Vorratsrolle 4 abgerollt, um die erste Ausgleichsrolle 15 im Gegenuhrzeigersinn herum gegen die Prägestation 6 geleitet, zwischen der Antriebsrolle 33 und der Hilfsrolle 47 sowie zwischen dem Prägezylinder 7 und dem Gegendruckzylinder 8 hindurch geführt und im Gegenuhrzeigersinn um die zweite Ausgleichsrolle 16 von der Prägestation 6 weggespannt und im Uhrzeigersinn auf die Vorratsrolle 5 gewickelt.

Die ungleichmässige Vorschubgeschwindigkeit der Folienbahn 1 in der Prägeebene 9 wird durch die Veränderung der Schlaufen 31 und 32 ausgemittelt, damit sich die Folienbahn 1 beim Abwickeln von der Vorratsrolle 4 durch die auftretenden Beschleunigungen nicht überdehnt und sich gleichmässig auf die Aufwickelrolle 5 aufwickelt. Der direkte Antrieb ermöglicht in der Freiphase des Prägezylinders 7 vorteilhaft eine sehr genau reproduzierbare Relativbewegung zwischen der Folienbahn 1 und der Prägematrize 12 mit wenig mechanischem Aufwand und unter minimaler Belastung der Folienbahn 1 durch unerwünschte, stossartig auftretende Zugspannungen.

Selbstverständlich können die Ausgleichsrollen 15, 16 anstelle der einfachen, hier beschriebenen Hebelpaare 17, 18 auch mit anderen Mitteln geführt werden. Beispielsweise können die Ausgleichsrollen 15, 16 eine geradlinige, senkrecht zur Achse des Prägezylinders 7 geführte Verschiebung parallel zur Prägeebene 9 ausführen, statt der beschriebenen Bewegung auf einem Kreisbogen.

In der Figur 6 ist eine vorteilhafte Vorrichtung gezeigt, die auf der Folienbahn 1 mit dem gleichen Prägezylinder 7 an zwei, um eine vorbestimmte Strecke auseinander liegenden Stellen prägt. Sie umfasst zwei um 180° versetzte Gegendruckzylinder 8, 48, die auf dem Prägezylinder 7 abrollen, eine verschiebbare Umlenkrolle 49, deren Durchmesser z. B. gleich gross ist wie der Prägezylinder 7, und eine Steuervorrichtung 24, die den Schrittantrieb 40 ansteuert. Eine Stange 50 trägt an einem Ende ein verschiebbares Lager der Umlenkrolle 49, während das andere Ende z. B. als Zahnstange ausgebildet ist, in die der Schrittantrieb 40 eingreift. Die Achsen der Zylinder 7, 8 und 48 definieren eine Achsebene 51. Die Umlenkrolle 49 ist auf der einen Seite der Achsebene 51 angeordnet, während sich auf deren anderen Seite die hier nicht gezeigte Auf- bzw. Abwickelvorrichtung der Folienbahn 1 und die hier nicht gezeigten Tänzer befinden.

Die Achse der Umlenkrolle 49 ist unter der Kontrolle der Steuereinrichtung 24 auf einer Geraden zur Achse des Prägezylinders 7 verstellbar, die senkrecht auf der Achsebene 51 steht. Der Abstand A zwischen den beiden Achsen der Umlenkrolle 49 und des Prägezylinders 7 ist mittels des Schrittantriebs 40 entsprechend der Rapportlänge auf einen vorbestimmten mittleren Wert eingestellt. Das vom Drehgeber 41 über die Leitung 43 an die Steuereinrichtung 24 abgegebene Signal bewirkt eine Aenderung des Abstandes A periodisch und synchron zu jeder Umdrehung des Prägezylinders 7, wobei der momentane Wert von A um diesen mittleren Wert pendelt. Die Amplitude der Aenderung des Abstandes A ist an der Steuereinrichtung vorbestimmt einstellbar.

Die Folienbahn 1 steht unter der mittels wenigstens zweier Tänzer erzeugten vorbestimmten Zugspannung. Die unbeprägte Folienbahn 1 kommt von der Abwickelvorrichtung her in der Prägeebene 9 auf die Achsebene 51 zu, läuft zwischen dem Prägezylinder 7 und dem Gegendruckzylinder 8 hindurch zur Umlenkrolle 49. Diese lenkt die Folienbahn 1 um 180° in eine weitere Prägeebene 52 zur Achsebene 51 zurück. Nach dem Durchlauf zwischen dem Prägezylinder 7 und dem weiteren Gegendruckzylinder 48 wird die beprägte Folienbahn 1 zur Aufwickelvorrichtung geleitet.

Die beiden Prägeebenen 9 und 52 stehen senkrecht zur Achsebene 51 und sind Tangentialebenen an den Prägezylinder 7.

Das Verändern des Abstandes A vergrössert oder verkleinert eine Umlenkschlaufe 53, die durch die Folienbahn 1 auf der der Umlenkrolle 49 zugewandten Seite der Achsebene 51 aufgespannt ist. Der Prägezylinder 7 dreht sich gleichmässig und die Prägematrize 12 (Figur 3) weist die vorbestimmte Prägegeschwindigkeit auf. In den beiden Schnittlinien, die die Achsebene 51 mit den beiden Prägeebenen 7, 52 erzeugt, wird gleichzeitig geprägt. Daher weist jede Prägeebene 9 bzw. 52 bei jeder Umdrehung des Prägezylinders 7 ihre Präge- und Freiphasen auf. In der weiteren Prägeebene 52 ist die Präge- und Freiphase gegen die der Prägeebene 9 um 180° phasenverschoben.

Da sich jede der beiden Prägephasen über mehr als 50% des Umfangs des Prägezylinders 7 erstreckt, ist die Folienbahn 1 ständig wenigstens in einer der beiden Prägeebenen 7, 52 in der Prägephase, so dass sie durch das Zusammenwirken des Prägezylinders 7 mit den beiden Gegendruckzylindern 8 und 48 von der Vorratsrolle 4 (Figur 5) über die Ausgleichsrolle 15 (Figur 5) abgezogen wird. Auf eine Antriebsrolle 33 (Figur 5) kann verzichtet werden.

Die unbeprägte Folienbahn 1 erhält in der unteren Prägeebene 9 z. B. auf der Rapportlänge eine erste Gruppe von Motiven 2 (Figur 1) eingeprägt. In der unmittelbar folgenden Freiphase wird die Vorschubgeschwindigkeit der Folienbahn 1 durch Vergrössern der Umlenkschlaufe 53 erhöht, damit die Folienbahn 1 um die Rapportlänge vorgezogen wird. Gleichzeitig befindet sich die weitere Prägeebene 52 in der Prägephase und die Folienbahn 1 wird dort mit der festgelegten Prägegeschwindigkeit vorgezogen. Der Anfang der nächsten in der unteren Prägeebene 9 eingeprägten Gruppe der Motive 2 weist einen Abstand von der Rapportlänge zum Ende der unmittelbar vorher eingeprägten Gruppe auf.

Jede unbeprägte Lücke zwischen den Gruppen der Motive 2 wird anschliessend in der weiteren Prägeebene 52 mit der gleichen Prägematrize 12 mit der Gruppe der Motive 2 beprägt. In der Freiphase der weiteren Prägeebene 52 verkleinert sich der Abstand A der Umlenkrolle 49, damit die Folienbahn um die Rapportlänge mit der erhöhten Vorschubgeschwindigkeit bis zur nächsten Lücke vorgezogen wird. Der Abstand A ändert sich daher periodisch, wobei die Umlenkschlaufe 53 als Zwischenspeicher für den wechselweisen Mehrvorschub der Folienbahn 1 in den Prägeebenen 9, 52 wirkt.

Der Vorteil dieser Vorrichtung liegt in einer grösseren Prägeleistung bei gleicher Prägegeschwindigkeit, weil die Folienbahn 1 in der Freiphase nicht verzögert, sondern im Gegenteil beschleunigt wird, da die Abzuggeschwindigkeit grösser als die Prägegeschwindigkeit ist.

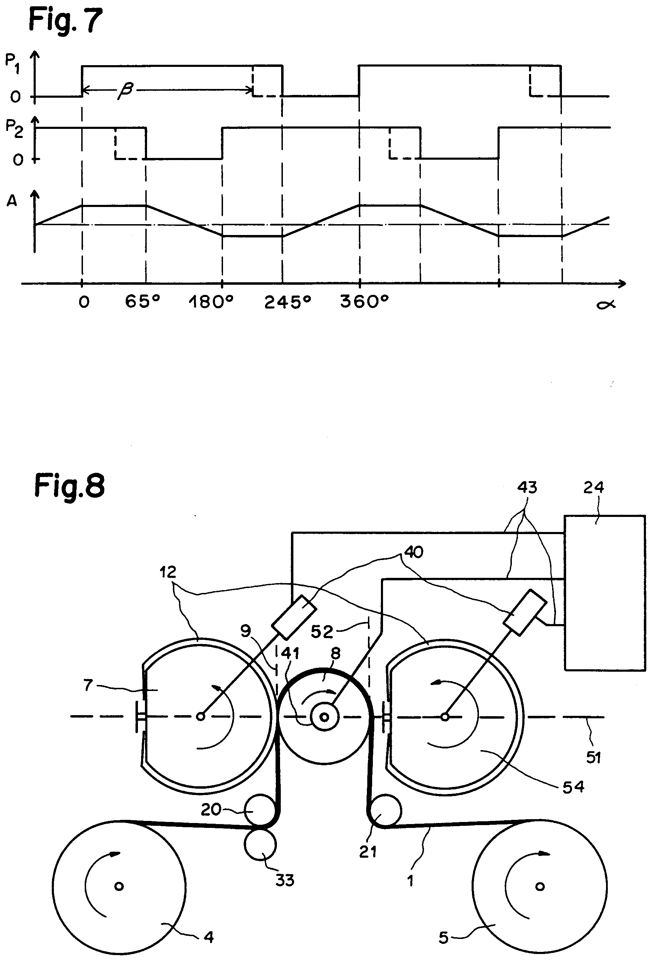

Die Figur 7 zeigt den Prägedruck P₁ unter dem Gegendruckzylinder 8, den Prägedruck P₂ unter dem Gegendruckzylinder 48 und den Abstand A als Funktionen des Drehwinkels α. Im dargestellten Beispiel beträgt in beiden Prägeebenen 9, 52 die Prägephase 245° und die Freiphase 115°. Falls die Metallfolie 38 (Figur 3) unter der Prägematrize 12 eingesetzt ist, fällt, wie dies gestrichelt in der Figur 7 eingezeichnet ist, der Prägedruck P₁ bzw. P₂ vor dem Ende der Prägephase ab. Die Rapportlänge bestimmt einen Prägewinkel β, der kleiner als die Prägephase ist.

Die Freiphasen, in denen der Prägedruck P₁ bzw. P₂ den Wert Null annimmt, erscheinen zwischen 65° und 180° in der Prägeebene 52 (Figur 6) und zwischen 245° und 360° in der Prägeebene 9. Der Abstand A verkleinert sich zwischen 65° und 180° bzw. vergrössert sich zwischen 245° und 360°, da der Prägewinkel β grösser als 180° ist. Sind beide Prägeebenen 9, 52 in der Prägephase, führt die Folienbahn 1 keine Relativbewegung gegen die Prägematrize 12 aus und die Grösse der Umlenkschlaufe 53 sowie der Wert A bleiben konstant.

Ist der Prägewinkel β gleich 180°, bleibt der Abstand A wie beim Stand der Technik konstant auf einem vorbestimmten Wert. Ist der Prägewinkel β kleiner als 180°, verschiebt sich die Phasenlage der Funktion des Abstandes A von der in der Figur 7 gezeichneten Phasenlage um 180°, d. h. die Prägegeschwindigkeit ist grösser als die Abzuggeschwindigkeit.

Die Prägevorrichtung gemäss der Figur 8 weist zwei identische Prägezylinder 7, 54 mit je einer, beispielsweise identischen Prägematrize 12 auf, die auf dem Gegendruckzylinder 8 abrollen. Die Achsen der Zylinder 7, 8 und 54 bestimmen die Achsebene 51. Beide Prägeebenen 9 und 52 sind Tangentialebenen an den Gegendruckzylinder 8 und senkrecht zur Achsebene 51. Jeder Prägezylinder 7 bzw. 54 ist in der radialen Richtung auf den Gegendruckzylinder 8 hin verschiebbar angeordnet, damit für jeden Prägezylinder 7 bzw. 54 der vorbestimmte Prägedruck unabhängig einstellbar ist. Jeder Prägezylinder 7 bzw. 54 ist vorteilhaft mittels eines unabhängigen Schrittantriebs 40 angetrieben. Die Steuereinrichtung 24 ist über die Leitungen 43 mit dem Drehgeber 41 und den Schrittantrieben 40 verbunden. Der Drehgeber 41 sitzt auf der Achse des Gegendruckzylinders 8 und übermittelt dessen Drehwinkel an die Steuereinrichtung 24, die für jeden Schrittantrieb 40 eine vorbestimmte Impulsfolge erzeugt.

Die Folienbahn 1 ist auf der gleichen Seite der Achsebene 51 so zu- und weggeführt, dass sie unter der vorbestimmten Zugspannung steht. Sie wird von der Vorratsrolle 4 über die Leitrolle 20 in die Prägeebene 9 geführt und um 180° über den Gegendruckzylinder 8 in die weitere Prägeebene 52 gelenkt. Anschliessen läuft die beprägte Folienbahn 1 über die Lenkrolle 21 auf die Aufwickelrolle 5.
Beispielsweise ist die Antriebsrolle 33 auf der Leitrolle 20 abrollend angeordnet. Die Antriebsrolle 33 ist mit einem hier nicht gezeigten Motor verbunden und treibt die Folienbahn 1 mit der gleichmässigen vorbestimmten Vorschubgeschwindigkeit an, die gleich der Prägegeschwindigkeit ist.

Jeder Prägezylinder 7 bzw. 54 weist seine Präge- und Freiphase auf. Während jeder Prägephase ist die Winkelgeschwindigkeit des Prägezylinders 7 bzw. 54 konstant, wobei die Prägematrizen 12 und der Gegendruckzylinder 8 auf ihrem Umfang die Prägegeschwindigkeit aufweisen, die gleich der Vorschubgeschwindigkeit der Folienbahn 1 ist. In jeder Freiphase wird periodisch und synchron zu jeder Umdrehung des Gegendruckzylinders 8 die Winkelgeschwindigkeit des Prägezylinders 7 bzw. 54 reduziert und wieder auf den alten Wert erhöht. Da die Folienbahn 1 gleichmässig vorgeschoben wird, entsteht in der Freiphase die Relativbewegung zwischen der Folienbahn 1 und der Prägematrize 12. Die Winkelgeschwindigkeit des Prägezylinders 54 ist gegenüber der des Prägezylinders 7 um eine vorbestimmte Phasenlage verschoben, die vom vorbestimmten Durchmesser des Gegendruckzylinders 8 und der Rapportlänge abhängig ist.

In die Folienbahn 1 werden in der Prägeebene 9 auf der Rapportlänge die Gruppen der Motive 2 eingeprägt, wobei zwischen zwei aufeinanderfolgenden Gruppen wegen des Absenkens der Winkelgeschwindigkeit des Prägezylinders 7 in der Freiphase die unbeprägte Lücke von der Rapportlänge entsteht. In der weiteren Prägeebene 52 prägt der weitere Prägezylinder 54 die Gruppen der Motive 2 genau in die unbeprägte Lücke, während er in seiner Freiphase die unter dem Prägezylinder 7 auf der Rapportlänge beprägte Folienbahn 1 vorbeiziehen lässt.

Die Antriebsrolle 33 kann beispielsweise auch auf dem Gegendruckzylinder 8 abrollend angeordnet sein und die Folienbahn 1 an dieser Stelle antreiben.

Die Verwendung zweier Prägematrizen 12 mit unterschiedlichen Rapportlängen ist möglich, wobei die Steuereinrichtung 24 für jeden Prägezylinder 7 und 54 die entsprechende Reduktion der Winkelgeschwindigkeit aufgrund der Rapportlänge seiner Prägematrize 12 berechnet.

Die in der ganzen Prägevorrichtung gleichmässige Vorschubgeschwindigkeit der Folienbahn 1 ist von Vorteil, da die Folienbahn 1 nur einer gleichmässigen, geringen Zugbelastung ausgesetzt ist und daher auch Folienbahnen 1 mit sehr geringen Zugfestigkeiten beprägt werden können, ohne eine Beschädigung der eingeprägten Motive 2 durch Ueberdehnung zu erleiden.

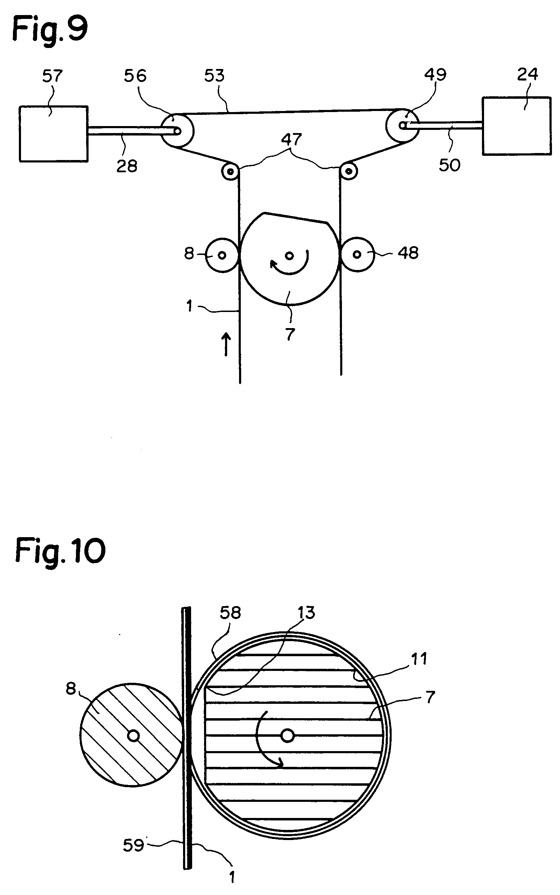

Vorzugsweise ist die Umlenkrolle 49 (Figur 6) in der Figur 9 durch zwei Rollen 49 und 56 mit verschiebbaren Achsen ersetzt, um die periodisch bewegte träge Masse der Umlenkrolle 49 zu verkleinern. Die Folienbahn 1 ist über die Umlenkschlaufe 53 zweimal an den Prägezylinder 7 geführt, wo die Folienbahn 1 zwischen den um 180° versetzten Gegendruckzylindern 8 und 48 geprägt wird. Zwei Hilfsrollen 47, die Umlenkrolle 49 und die Stellrolle 56 spannen die Umlenkschlaufe 53 auf.

Ein Stellantrieb 57 greift über den Schieber 28 an der verschiebbaren Achse der Stellrolle 56 an und legt die vom Umfang des Prägezylinders 7 vorbestimmte mittlere Länge der Umlenkschlaufe 53 fest. Mittels der Stange 50 überträgt die Steuereinrichtung 24 die mit der Umdrehung des Prägezylinders 7 synchronisierte, vorbestimmte periodische Verschiebung auf die Achse der Umlenkrolle 49, um die Länge der Umlenkschlaufe 53 periodisch zu verändern und um den Durchlauf der Folienbahn mit der Prägematrize 12 (Figur 3) abzustimmen.

In der Figur 10 weist der Prägezylinder 7 bzw. 54 (Figur 8) beidseitig auf der gleichen Achse sitzend je einen Laufring 58 auf. Der Durchmesser des Laufrings 58 ist um einen vorbestimmten Betrag grösser als der Durchmesser des Prägezylinders 7 bzw. 54. Auf den beiden Laufringen 58 rollt der Gegendruckzylinder 8 bzw. 48 (Figur 9) ständig ab. Zusammen mit einer allfälligen Metallfolie 38 (Figur 3) ist die Prägematrize 12 (Figur 3) in der Vertiefung zwischen den beiden Laufringen 58 auf dem Mantelausschnitt 11 aufgespannt. Der Wert des Prägedrucks zwischen der Folienbahn 1 und der Prägematrize 12, der unter dem Gegendruckzylinder 8 bzw. 48 erreicht wird, ist durch die Höhe vorbestimmt, die die Prägematrize 12, die allfällige Metallfolie 38 und die Folienbahn 1 auf dem Mantelausschnitt 11 gemeinsam auftragen. Diese Anordnung vermeidet den getriebeschädigenden, sprunghaften Anstieg des zum Drehen des Prägezylinders 7 bzw. 54 notwendigen Drehmomentes, wenn die Startkante 13 auf den Gegendruckzylinder 8 bzw. 48 aufläuft.

Beispielsweise kann zusammen mit der Folienbahn 1 ein Hilfsband 59 von gleicher Breite aus Papier, Metall oder Kunststoff durch die Prägestation 6 (Figur 2) geführt werden, damit die Folienbahn 1 und das Hilfsband 59 die für den Prägedruck notwendige Materialdicke aufweisen. Das Hilfsband 59 liegt auf der unbeprägten Seite der Folienbahn 1 auf und kann z. B. als Trägerband bereits auf der Vorratsrolle 4 (Figur 2) auf der Folienbahn 1 aufgebracht sein oder kann unmittelbar vor der Prägestation 6 mit der Folienbahn 1 vereinigt werden, wobei das Hilfsband 59 wiederholt verwendbar ist und z. B. als Endlosband ausgebildet sein kann.

## Patentansprüche

1. Vorrichtung zum Prägen von feinen Strukturen eines Motivs (2) in einem vorbestimmten Motivabstand (3) in eine Folienbahn (1) mittels rotierender Prägezylinder (7; 54), die eine Ausnehmung (10) zum Befestigen einer Prägematrize (12) auf einem Mantelausschnitt (11) des Prägezylinders (7 bzw. 54) aufweisen und die wenigstens im Bereich der Ausnehmung (10) bei jeder Umdrehung des Prägezylinders (7) in einer Freiphase einen Freiraum bzw. eine Öffnung (14) zwischen dem Prägezylinder (7 bzw. 54) und einem Gegendruckzylinder (8 bzw. 48) freigeben;
wobei die Prägematrize (12) innerhalb der Ausnehmung (10) befestigt ist und im wesentlichen die ganze Fläche des Mantelausschnitts (11) umspannt und wobei die zum Prägen nutzbare Länge der Prägematrize (12) kleiner oder gleich ist als der von der Ausnehmung (10) begrenzte Mantelausschnitt (11),
**dadurch gekennzeichnet,**
daß der durch die Ausnehmung (10) begrenzte Mantelausschnitt (11) des Prägezylinders (7 bzw. 54) mehr als 50% des Prägezylinderumfangs beträgt,
daß die Prägematrize (12) dünn und flexibel ausgebildet und mit Negativen der in die Folienbahn (1) zu prägenden feinen Strukturen des Motivs (2) versehen ist,
daß die Gesamtlänge der auf dem Mantelausschnitt (11) befindlichen Prägematrize (12) zum Prägen verwendet wird oder sich aus der zum Prägen nutzbaren Länge, die ein ganzzahliges Vielfaches des Motivabstands (3) ist, und dem bis zur Ausnehmung (10) reichenden, glattprägenden Bruchteil eines Motivabstands (3) zusammensetzt, und daß die Folienbahn und die Prägematrize der Prägezylinder während jeder der Freiphasen relativ zueinander bewegbar sind.

2. Vorrichtung nach Anspruch 1,
dadurch gekennzeichnet,
daß zwischen der Prägematrize (12) und dem Mantelausschnitt (11) auf der ganzen Breite der Prägematrize (12) eine Metallfolie (38) angeordnet ist,
daß die Metallfolie (38) die Prägematrize (12) von der Startkante (13) her auf einer Rapportlänge unterstüzt, die ein ganzzahliges Vielfaches des Motivabstands (3) ist und die die Dauer einer Prägephase und der Freiphase bestimmt.

3. Vorrichtung nach Anspruch 1 oder 2,
dadurch gekennzeichnet,
daß die Folienbahn (1) relativ zur Prägematrize (12) der Prägezylinder (7 bzw. 54) während jeder der Freiphasen verschiebbar ist.

4. Vorrichtung nach Anspruch 3,
dadurch gekennzeichnet,
daß in Bahntransportrichtung vor und hinter dem Prägezylinder (7) Ausgleichsrollen (15, 16) zum Spannen der Folienbahn (1) in einer Prägeebene (9) angeordnet sind, die sich zwischen einem Gegendruckzylinder (8) und dem Prägezylinder (7) befindet,
daß die Ausgleichsrollen (15, 16) auf je einem Hebelpaar (17, 18) drehbar gelagert sind,
daß die Ausgleichsrollen (15, 16) zur Führung und Verschiebung der Folienbahn (1) in der Prägeebene (9) verschwenk- und verschiebbar angeordnet sind und
daß die durch den Motivabstand (3) auf der Folienbahn (1) bestimmte Amplitude zur periodischen Verschiebung der Ausgleichsrollen (15, 16) an einer Steuereinrichtung (24) einstellbar ist.

5. Vorrichtung nach Anspruch 4,
dadurch gekennzeichnet,
daß die Hebelpaare (17, 18) und ein Verbindungsstück (19) ein Parallelogrammgestänge bilden, das von der Steuereinrichtung (24) in eine mit dem Prägezylinder (7) synchronisierte periodische Bewegung versetzt wird,
daß in der Bahntransportrichtung eine Antriebsrolle (33) zwischen einer Vorratsrolle (4) und der ersten Ausgleichsrolle (15) angeordnet ist und
daß die mittels der Antriebsrolle (33) erzeugte Abzuggeschwindigkeit der Folienbahn (1) vorbestimmt und konstant ist.

6. Vorrichtung nach Anspruch 4,
dadurch gekennzeichnet,
daß an den Hebelpaaren (17, 18) zum Spannen der Folienbahn (1) in der Prägeebene (9) Spannfedern (45, 46) angreifen,
daß für den Bahntransport der Folienbahn (1) in der Prägeebene (9) mit der Vorschubgeschwindigkeit eine Antriebsrolle (33) zwischen der ersten Ausgleichsrolle (15) und dem ersten Prägezylinder (7) angeordnet ist und
daß die Antriebsrolle (33) mittels eines Schrittantriebs (40) zum Umsetzen einer in der Steuereinrichtung (24) erzeugten Impulsfolge in die Vorschubgeschwindigkeit eingerichtet ist, wobei die Antriebsrolle (33) eine einer zur Prägezylinderumdrehung synchrone periodische Änderung der Winkelgeschwindigkeit aufweist.

7. Vorrichtung nach Anspruch 3,
dadurch gekennzeichnet,
daß zwei identische Prägezylinder (7; 54) um 180° versetzt auf dem Gegendruckzylinder (8) abrollend angeordnet sind,
daß die Folienbahn (1) in Bahntransportrichtung von einer ersten Prägeebene (9) um den Gegendruckzylinder (8) in eine zweite Prägeebene (52) geführt wird und eine gleichmässige Vorschubgeschwindigkeit aufweist,
daß jeder Prägezylinder (7 bzw. 54) mit einem eigenen Schrittantrieb (40) ausgerüstet ist,
daß eine Steuereinrichtung (24) mit Mittel zur Synchronisation der Schrittantriebe (40) mit dem Drehwinkel des Gegendruckzylinders (8) eingerichtet ist und
daß in jeder Freiphase der Umdrehung eines Prägezylinders (7 bzw. 54) eine Veränderung der Winkelgeschwindigkeit erfolgt.

8. Vorrichtung nach Anspruch 3,
dadurch gekennzeichnet,
daß zwei Gegendruckzylinder (8, 48) auf einem Prägezylinder (7) um 180° versetzt abrollend angeordnet sind,
daß die Folienbahn (1) in eine erste Prägeebene (9) zwischen dem ersten Gegendruckzylinder (8) und dem Prägezylinder (7) über wenigstens eine Umlenkrolle (49; 49, 56) in eine zweite Prägeebene (52) zwischen dem zweiten Gegendruckzylinder (48) und dem Prägezylinder (7) geführt ist,
daß das Prägen mit der Prägematrize (12) auf einer Rapportlänge zwischen dem ersten Gegendruckzylinder (8) und, um 180° phasenverschoben, dem zweiten Gegendruckzylinder (48) erfolgt und
daß mittels einer Verschiebung der Umlenkrollen (49 bzw. 49, 56) synchron zur Umdrehung des Prägezylinders (7) eine Verschiebung der Folienbahn (1) in der jeweiligen Öffnung (14) um jeweils eine Rapportlänge derart erfolgt, daß in der Öffnung (14) zwischen dem Prägezylinder (7) und dem ersten Gegendruckzylinder (8) die ungeprägte Folienbahn (1) und in der Öffnung (14) zwischen dem Prägezylinder (7) und dem zweiten Gegendruckzylinder (48) die beim ersten Gegendruckzylinder (8) geprägte Folienbahn (1) vorgezogen wird.

9. Vorrichtung nach einem der vorhergehenden Ansprüche,
dadurch gekennzeichnet,
daß der Prägezylinder (7 bzw.54) beidseitig auf der gleichen Achse sitzend einen Laufring (58) aufweist, deren Durchmesser um einen vorbestimmten Betrag größer ist als der Durchmesser des Prägezylinders (7 bzw. 54), auf welchen der Gegendruckzylinder (8 bzw. 48) abrollt und zwischen welchen sich die Prägematrize (12) befindet,
wobei der Prägedruck durch die Höhe der Prägematrize (12), der Metallfolie (38), der Folienbahn (1) und ev. einem Hilfsband (59), das zwischen der Folienbahn (1) und dem Gegendruckzylinder (8 bzw. 48) geführt ist, bestimmt ist.

10. Verfahren zum Aneinanderreihen von einzuprägenden Motiven auf einer Folienbahn (1) mittels einer Vorrichtung nach einem der vorhergehenden Ansprüchen,
dadurch gekennzeichnet,
daß die Folienbahn (1) von einer Vorratsrolle (4) über eine Prägestation (6) zu einer Aufwickelrolle (5) geführt wird und
daß die Motive lückenlos mit einem bestimmtem Motivabstand auf die Folienbahn (1) innerhalb der Prägestation (6) von einem mit einer Ausnehmung (10) ausgestatteten Prägezylinder (7, 54) und einem Gegendruckzylinder (8, 48) mittels auf einem Mantelausschnitt (11) des Prägezylinders (7, 54) aufgebrachten und innerhalb der Ausnehmung (10) befestigten Prägematrizen (12) geprägt werden, indem eine Relativbewegung zwischen der Folienbahn (1) und der Prägematrize (12) erzeugt wird, während die Ausnehmung (10) des Prägezylinders (7, 54) dem Gegendruckzylinder (8, 48) gegenübersteht, so daß der Motivabstand der einzuprägenden Motive unabhängig vom Umfang des Prägezylinders (7, 54) gewählt werden kann.

## Claims

1. Apparatus for embossing fine structures of a motif (2) at a predetermined motif spacing (3) into a foil web (1) by means of rotating embossing cylinders (7; 54) which have a recess (10) for fixing an embossing matrix (12) on a peripheral portion (11) of the embossing cylinder (7 or 54 respectively) and which in each revolution of the embossing cylinder (7), in a free phase, at least in the region of the recess (10), liberate a free space or an opening (14) between the embossing cylinder (7 or 54 respectively) and a backing cylinder (8 or 48 respectively); wherein the embossing matrix (12) is fixed within the recess (10) and embraces substantially the entire surface area of the peripheral portion (11) and wherein the length of the embossing matrix (12), which can be used for the embossing operation, is smaller than or equal to the peripheral portion (11) defined by the recess (10),
characterised in that
the peripheral portion (11) of the embossing cylinder (7 or 54 respectively), which is defined by the recess (10), is more than 50% of the periphery of the embossing cylinder,
that the embossing matrix (12) is thin and flexible and is provided with negatives of the fine structures of the motif (2), which are to be embossed into the foil web (1),
that the overall length of the embossing matrix (12) which is disposed on the peripheral portion (11) is used for the embossing operation or is made up of the length which can be used for the embossing operation and which is an integral multiple of the motif spacing (3), and the smooth-embossing fraction of a motif spacing (3), which extends as far as the recess (10), and
that the foil web and embossing matrix of the embossing cylinders are movable relative to each other during each of the free phases.

2. Apparatus according to claim 1
characterised in that
a metal foil (38) is arranged between the embossing matrix (12) and the peripheral portion (11) over the entire width of the embossing matrix (12), and
that the metal foil (38) supports the embossing matrix (12) from the start edge (13) over a repeat length which is an integral multiple of the motif spacing (3) and which determines the duration of an embossing phase and the free phase.

3. Apparatus according to claim 1 or claim 2
characterised in that
the foil web (1) is displaceable relative to the embossing matrix (12) of the embossing cylinders (7 and 54 respectively) during each of the free phases.

4. Apparatus according to claim 3
characterised in that
arranged in the web transport direction upstream and downstream of the embossing cylinder (7) are compensating rollers (15, 16) for tensioning the foil web (1) in an embossing plane (9) which is between a backing cylinder (8) and the embossing cylinder (7),
that the compensating rollers (15, 16) are rotatably mounted on a respective pair of levers (17, 18),
that the compensating rollers (15, 16) are arranged pivotably and displaceably for guiding and displacing the foil web (1) in the embossing plane (9), and
that the amplitude defined by the motif spacing (3) on the foil web (1), for periodic displacement of the compensating rollers (15, 16), can be set at a control device (24).

5. Apparatus according to claim 4
characterised in that
the pairs of levers (17, 18) and a connecting portion (19) form a parallelogram linkage which is displaced with a periodic movement synchronised with the embossing cylinder (7), by the control device (24),
that a drive roller (33) is disposed between a supply roll (4) and the first compensating roller (15) in the web transport direction, and
that the draw-off speed of the foil web (1), which is produced by means of the drive roller (33), is predetermined and constant.

6. Apparatus according to claim 4
characterised in that
tension springs (45, 46) engage the pairs of levers (17, 18) for tensioning the foil web (1) in the embossing plane (9),
that a drive roller (33) is arranged between the first compensating roller (15) and the first embossing cylinder (7) for transport of the foil web (1) in the embossing plane (9) at the forward feed speed, and
that the drive roller (33) is adapted by means of a stepping drive (40) to convert a pulse sequence produced in the control device (24) into the forward feed speed, wherein the drive roller (33) has a periodic variation in the angular speed, which variation is synchronous with respect to the embossing cylinder rotation.

7. Apparatus according to claim 3
characterised in that
two identical embossing cylinder (7; 54) are arranged to roll on the backing cylinder (8) in a relationship of being displaced through 180°,
that the foil web (1) is guided in the web transport direction from a first embossing plane (9) around the backing cylinder (8) into a second embossing plane (52) and moves at a uniform forward feed speed,
that each embossing cylinder (7 or 54 respectively) is provided with its own stepping drive (40),
that a control means (24) is provided with means for synchronisation of the stepping drives (40) with the rotational angle of the backing cylinder (8), and
that a variation in the angular speed occurs in each free phase of the revolution of an embossing cylinder (7 or 54 respectively).

8. Apparatus according to claim 3
characterised in that
two backing cylinder (8, 48) are arranged to roll on an embossing cylinder (7) in a relationship of being displaced through 180°,
that the foil web (1) is guided into a first embossing plane (9) between the first backing cylinder (8) and the embossing cylinder (7) and by way of at least one direction-changing roller (49; 49, 56) into a second embossing plane (52) between the second backing cylinder (48) and the embossing cylinder (7),
that the embossing operation with the embossing matrix (12) is effected on a repeat length between the first backing cylinder (8) and, phase-shifted through 180°, the second backing cylinder (48), and
that a displacement of the direction-changing roller (49 or 49, 56) synchronously with respect to the revolution of the embossing cylinder (7) produces displacement of the foil web (1) in the respective opening (14) by a respective repeat length in such a way that the unembossed foil web (1) is pulled forward in the opening (14) between the embossing cylinder (7) and the first backing cylinder (8) and the foil web (1) which is embossed at the first backing cylinder (8) is pulled forward in the opening (14) between the embossing cylinder (7) and the second backing cylinder (48).

9. Apparatus according to one of the preceding claims
characterised in that
the embossing cylinder (7 or 54 respectively) has on both sides and carried on the same spindle a running ring (58), the diameter of the rings being a predetermined amount larger than the diameter of the embossing cylinder (7 or 54 respectively) and the backing cylinder (8 or 48 respectively) rolling against the rings and the embossing matrix (12) being disposed between the rings,
wherein the embossing pressure is determined by the height of the embossing matrix (12), the metal foil (38), the foil web (1) and possibly an auxiliary strip (59) which is guided between the foil web (1) and the backing cylinder (8 or 48 respectively).

10. A method of arranging motifs to be embossed in a row on a foil web (1) by means of an apparatus according to one of the preceding claims
characterised in that
the foil web (1) is guided from a supply roll (4) by way of an embossing station (6) to a take-up roll (5) and
that the motifs are embossed without gaps at a given motif spacing onto the foil web (1) within the embossing station (6) by an embossing cylinder 7, 54) provided with a recess (10) and a backing cylinder (8, 48) by means of embossing matrices (12) which are mounted on a peripheral portion (11) of the embossing cylinder (7, 54) and fixed within the recess (10), by a relative movement being produced between the foil web (1) and the embossing matrix (12) while the recess (10) of the embossing cylinder (7, 54) is opposite the backing cylinder (8, 48) so that the motif spacing of the motifs to be embossed can be selected independently of the periphery of the embossing cylinder (7, 54).

## Revendications

1. Dispositif pour estamper des structures fines d'un motif (2), avec une distance prédéterminée (3) séparant les motifs, dans une bande de feuille (1) au moyen de cylindres rotatifs d'estampage (7 ; 54) qui comportent une cavité (10) de fixation d'une matrice d'estampage (12) sur un secteur d'enveloppe (11) du cylindre d'estampage (7 ainsi que 54) et qui libèrent au moins dans la région de la cavité (10), à chaque révolution du cylindre d'estampage (7), un espace libre ou une ouverture (14) comprise entre le cylindre d'estampage (7 ou 54) et un cylindre de contre-pression (8 ou 48) au cours d'une phase libre ;
la matrice d'estampage (12) étant fixée à l'intérieur de la cavité (10) et couvrant sensiblement la totalité de la surface du secteur d'enveloppe (11) et la longueur de la matrice d'estampage (12) qui est utile pour l'estampage étant inférieure ou égale au secteur d'enveloppe (11) délimité par la cavité (10),
caractérisé
en ce que le secteur d'enveloppe (11) du cylindre d'estampage (7 ou 54), qui est délimité par la cavité (10), représente plus de 50% de la circonférence du cylindre d'estampage,
en ce que la matrice d'estampage (12) est mince et souple et comporte des négatifs des structures fines du motif (2) qui doivent être estampées dans la bande de feuille (1),
en ce que la longueur totale de la matrice d'estampage (12) qui se trouve sur le secteur d'enveloppe (11) est utilisée pour l'estampage ou se compose de la longueur utile pour l'estampage, qui est un multiple entier de la distance (3) séparant les motifs, et de la fraction d'une distance (3) séparant les motifs qui provoque un estampage uni et qui atteint la cavité (10),
et en ce que la bande de feuille et la matrice d'estampage du cylindre d'estampage sont déplaçables l'une par rapport à l'autre pendant chacune des phases libres,

2. Dispositif selon la revendication 1,
caractérisé
en ce qu'une feuille métallique (38) est disposée entre la matrice d'estampage (12) et le secteur d'enveloppe (11) sur la totalité de la largeur de la matrice d'estampage (12),
en ce que la feuille métallique (38) soutient la matrice d'estampage (12) à partir du bord de début (13) sur une longueur de répétition qui est un multiple entier de la distance (3) séparant les motifs et qui détermine la durée d'une phase d'estampage et de la phase libre.

3. Dispositif selon la revendication 1 ou 2,
caractérisé
en ce que la bande de feuille (1) est déplaçable par rapport à la matrice d'estampage (12) du cylindre d'estampage (7 ou 54) pendant chacune des phases libres.

4. Dispositif selon la revendication 3,
caractérisé
en ce que des rouleaux compensateurs (15, 16) sont disposés, dans le sens du transport de la bande, en amont et en aval du cylindre d'estampage (7) pour tendre la bande de feuille (1) dans un plan d'estampage (9) qui se trouve entre un cylindre de contre-pression (8) et le cylindre d'estampage (7),
en ce que chacun des rouleaux compensateurs (15, 16) est monté rotatif sur une paire de leviers (17, 18),
en ce que les rouleaux compensateurs (15, 16) sont montés rotatifs et déplaçables pour le guidage et le déplacement de la bande de feuille (1) dans le plan d'estampage (9) et
en ce que l'amplitude du déplacement périodique des rouleaux compensateurs (15, 16), qui est déterminée par la distance (3) séparant les motifs sur la bande de feuille (1), est réglable sur un dispositif de commande (24).

5. Dispositif selon la revendication 4,
caractérisé
en ce que les paires de leviers (17, 18) et une traverse (19) forment une tringlerie en parallélogramme articulé que le dispositif de commande (24) convertit en un mouvement périodique synchronisé avec le cylindre d'estampage(7),
en ce qu'un rouleau d'entraînement (33) est disposé, dans le sens du transport de la bande, entre un rouleau de réserve (4) et le premier rouleau compensateur (15) et
en ce que la vitesse de prélèvement de la bande de feuille (1) qui est produite par le rouleau d'entraînement (33) est prédéterminée et constante.

6. Dispositif selon la revendication 4,
caractérisé
en ce que des ressorts tendeurs (45, 46) attaquent les paires de leviers (17, 18) pour tendre la bande de feuille (1) dans le plan d'estampage (9),
en ce qu'un rouleau d'entraînement (33) est disposé entre le premier rouleau compensateur (15) et le premier cylindre d'estampage (7) pour le transport de la bande de feuille (1) dans le plan d'estampage (9) à la vitesse d'avance et
en ce que le rouleau d'entraînement (33) est agencé au moyen d'une commande pas à pas (40) pour la conversion d'une séquence d'impulsions générées dans le dispositif de commande (24) en la vitesse d'avance, le rouleau d'entraînement (33) présentant une variation périodique de la vitesse angulaire qui est synchrone avec une rotation du cylindre d'estampage.

7. Dispositif selon la revendication 3,
caractérisé
en ce que deux cylindres identiques d'estampage (7 : 54) sont disposés roulants sur le cylindre de contre-pression (8) en étant décalés de 180°,
en ce que la bande de feuille (1) est guidée, dans le sens du transport de la bande, d'un premier plan d'estampage (9) autour du cylindre de contre-pression (8) pour être dirigée dans un second plan d'estampage (52) et elle a une vitesse constante d'avance,
en ce que chaque cylindre d'estampage (7 et 54) est équipé d'une commande pas à pas propre (40),
en ce qu'un dispositif de commande (24) est équipé d'un moyen de synchronisation de la commande pas à pas (40) avec l'angle de rotation du cylindre de contre-pression (8) et
en ce qu'une variation de la vitesse angulaire a lieu à chaque phase libre de la révolution d'un cylindre d'estampage (7 et 54).

8. Dispositif selon la revendication 3,
caractérisé
en ce que deux cylindres de contre-pression (8, 48) sont disposés roulants sur un cylindre d'estampage (7) en étant décalés de 180°,
en ce que la bande de feuille (1) est guidée dans un premier plan d'estampage (9) entre le premier cylindre de contre-pression (8) et le cylindre d'estampage (7) et par l'intermédiaire d'au moins un rouleau de renvoi (49 ; 49, 56) dans un second plan d'estampage (52) passant entre le second cylindre de contre-pression (48) et le cylindre d'estampage (7),
en ce que l'estampage à l'aide de la matrice d'estampage (12) s'effectue sur une longueur de répétition entre le premier cylindre de contre-pression (8) et, avec un déphasage de 180°, le second cylindre de contre-pression (48) et
en ce qu'un déplacement du rouleau de renvoi (49, respectivement 49, 56) a lieu en synchronisme avec la rotation du cylindre d'estampage (7), alors que la bande de feuille (1) avance dans l'ouverture particulière (14) dans chaque cas sur une longueur de répétition, de manière que la bande de feuille non estampée (1) soit tirée dans l'ouverture (14) comprise entre le cylindre d'estampage (7) et le premier cylindre de contre-pression (8) et que la bande de feuille (1) estampée par son passage sur le premier cylindre de contre-pression (8) soit tirée dans l'ouverture (14) comprise entre le cylindre d'estampage (7) et le second cylindre de contre-pression (48).

9. Dispositif selon l'une des revendications précédentes,
caractérisé
en ce que le cylindre d'estampage (7 ou 54) comprend sur chaque côté une bague de roulement (48) montée sur le même axe, dont le diamètre est d'une valeur prédéterminée supérieur au diamètre du cylindre d'estampage (7 ainsi que 54) sur lequel roule le cylindre de contre-pression (8 ainsi que 48) et entre lesquelles se trouve la matrice d'estampage (12),
la pression d'estampage étant déterminée par la hauteur de la matrice d'estampage (12), de la feuille de métal (38), de la bande de feuille (1) et éventuellement d'un ruban auxiliaire (59) qui est guidé entre la bande de feuille (1) et le cylindre de contre-pression (8 ou 48).

10. Procédé de juxtaposition de motifs devant être estampés sur une bande de feuille (1) au moyen d'un dispositif selon l'une des revendications précédentes,
caractérisé
en ce que la bande de feuille (1) est guidée d'un rouleau de réserve (4), par l'intermédiaire d'un poste d'estampage (6), vers un rouleau d'enroulement (5) et en ce que les motifs sont estampés en continu, avec une distance prédéterminée séparant les motifs, sur la bande de feuille (1) à l'intérieur du poste d'estampage (6) par un cylindre d'estampage (7, 54) comportant une cavité (10) et par un cylindre de contre-pression (8, 48) au moyen d'une matrice d'estampage (12) placée sur un secteur d'enveloppe (11) du cylindre d'estampage (7, 54) et fixée à l'intérieur de la cavité (10), un mouvement relatif étant généré entre la bande de feuille (1) et la matrice d'estampage (12) pendant que la cavité (10) du cylindre d'estampage (7, 54) est en face du cylindre de contre-pression (8, 48), de manière que la distance séparant les motifs devant être estampés puisse être adoptée indépendamment de la circonférence du cylindre d'estampage (7, 54).
